# EUROPEAN PATENT APPLICATION

(11) **EP 4 841 143 A1**
(43) Date of publication of application: **18.11.2026**
(21) Application number: 25176225.8
(22) Date of filing: 13.05.2025
(51) Int. Cl.: F16L 9/04, B32B 1/08, F16L 9/12

(54) **PIPE WITH A POLYMER SURFACE AND A PROTECTIVE FIBRE REINFORCED CLADDING**

(71) Applicant: RFD Innovations AG, 6004 Luzern (CH)
(72) Inventor: Welker, Daniel, 6004 Luzern (CH); Welker, Ruirui, 6004 Luzern (CH)
(74) Representative: Eisenführ Speiser

(57) **Abstract**

The invention refers to a pipe for a pipeline. The pipe comprises a tube (12) either of plastic of enclosed by a plastic sheathing with a polymer surface, which is enclosed by a fibre reinforced protective cladding (16). According to the invention, the bonding to the fibre reinforced protective cladding to the polymer surface of the plastic is increased by increasing the free surface energy (FSE) of the polymer surface by means of flame treatment, plasma treatment, corona treatment or chemical treatment.

## Description

According to one aspect, the invention relates to a pipe with a fibre-reinforced protective cladding enclosing a polymer pipe surface. Such pipe can comprise a tube made of plastic, for example polyolefins, or of metal, for example steel, or of a combination thereof, for example a metal pipe with an outer surface of plastic materials, for example fusion-bonded epoxy, polyethylene, polypropylene and/or polyurethane or hybrid pipes for example with a combination of layers such as steel pipes with a sheathing of polyurethane-foam and polyolefin-based casing materials for temperature insulation.

Pipes for the transport of liquid or gaseous media installed buried or laid on the sea-bed are known to be either made of plastic, such as for example polyethylene or polypropylene or comprise a metal tube, for example a steel tube covered with plastic materials for corrosion protection, for example fusion-bonded epoxy, polyethylene, polypropylene and/or polyurethane. While such plastic materials provide good corrosion protection on the one hand, as the moisture of the surrounding environment and/or electrolytes cannot cause corrosion of the pipe (in the case of plastic pipes) respectively cannot come into contact with the metallic pipe materials (in the case of metallic pipes). On the other hand, plastic materials commonly used for such corrosion prevention or protection, such as fusion-bonded epoxy, polyethylene, polypropylene and/or polyurethane have only a relatively low mechanical strength. This means that physical forces acting on the plastic materials of the pipe during installation or operation of the pipeline can lead to damages of such plastic materials. Such forces could be static compression or pulling forces in axial as well as radial direction of the pipe (static forces) as well as abrasion, impact, indentation or gouging or similar forces (mechanical forces).

To protect the pipe against mechanical forces, it is known to additionally provide the pipe with a fibre-cement coating, a concrete-weight coating or a fibre reinforced plastic (FRP) cladding, in particular a glass-fibre reinforced plastic (GRP) cladding.

Metal pipes with a glass-fibre reinforced plastic cladding are inter alia disclosed in WO 01/05580 A1 and WO 2020/002660 A1. The glass-fibre reinforced plastic cladding protects the pipe during various installation methods, such as trenchless pipe-laying, open trench pipe-laying or subsea pipe-laying.

For producing the fibre reinforced plastic cladding, resin-impregnated or resin-soaked fibre fabrics are wound around a pipe. Different kind of fibres, such as glass fibres, basalt fibres, carbon fibres, polyamide fibres and others, in different fabric forms can be applied to the pipe with different fibre orientations and various winding/application angles.

Plastic pipes are commonly not protected with a fibre-reinforced plastic cladding. Instead they can be directly enforced by integration of fibres, such as glass fibres, into the plastic material of the pipe, for example during the extrusion process.

Hybrid pipes, such as metal pipes with temperature-insulation layers are disclosed in WO 2023/198902 A1 as a system with glass-fibre reinforced cladding for strengthening and protection of the pipe.

It is an object of the invention to provide an improved pipe with a polymer surface and a fibre-reinforced cladding applied thereon.

According to a first aspect of the invention, the object is achieved by means of a pipe comprising a plastic tube with a polymer surface or a metal tube enclosed by a plastic layer with a polymer surface. A fibre-reinforced protective cladding is applied to the polymer surface and thus encloses the plastic tube or the intermediate plastic layer that encloses the metal tube. The polymer surface, in particular if made of Polyethylene (PE) or Polypropylene (PP) commonly has a very low surface energy and hence does not readily bond with thermoset plastic materials. It is one aspect of the invention to increase the surface free energy (SFE) of the polymer surface by means of flame treatment, plasma treatment, corona treatment or chemical treatment. A polymer surface having an increased free surface energy herein is also called an activated polymer surface. According to the first aspect of the invention, the polymer surface of the plastic tube or plastic layer is activated by means of flame treatment, plasma treatment, corona treatment or chemical treatment and thus provides an increased surface energy compared to an untreated polymer surface.

Accordingly, the pipe comprises a plastic tube with a polymer surface or a metal tube enclosed by a plastic layer with a polymer surface. The polymer surface is activated by means of flame treatment, plasma treatment, corona treatment or chemical treatment. A fibre-reinforced protective cladding is applied to the activated polymer surface and thus encloses the plastic tube or the intermediate plastic layer that encloses the metal tube.

Preferably, the polymer surface is flame treated and provides a flame activated interface to which the fibre reinforced cladding is applied.

Surface activation of a polymer surface with otherwise low surface energy by means of flame treatment, plasma treatment, corona treatment or chemical treatment only has a time-limited effect, as various environmental factors, such as dust, humidity, etc. can subsequently significantly reduce the surface activation. Therefore, it is another alternative aspect of the invention to activate the polymer surface by increasing the surface free energy by flame-pyrolytical deposition of certain oxides, for example silicon dioxide (SiO₂). Thus, flame-pyrolytically deposited oxide layers, such as SiO₂ can be generated on the polymer surface.

The process used for flame-pyrolytical deposition of, for instance, SiO₂ is known as combustion chemical vapour deposition (CCVD). In the CCVD process, a precursor compound, for instance a metal-organic compound or a metal salt, is added to a burning gas. The flame of the burning gas is moved closely to the polymer surface to be activated by flame-pyrolytical deposition of, for instance, SiO₂. The high energy within the flame converts the precursors into highly reactive intermediates, which readily react with the plastic layer's polymer surface, forming a firmly adhering deposit. The microstructure and thickness of the flame-pyrolytically deposited layer can be controlled by varying process parameters such as speed of the passing of the flame over the pipe, number of passes, temperature of the plastic layer and distance between flame and the polymer surface. These parameters are determined in consideration of the required bonding with the fibre-reinforced protective cladding layer for the specific application, while ensuring that the temperature control during the flame treatment process causes no structural damages to the plastic tube or intermediate plastic layer. CCVD can produce coatings with orientation from amorphous to epitaxial, and can produce conformal flame-pyrolytically deposited layers less than 10 nm thick. Typically, CCVD produced coatings can be 5 to 500 nm thick, preferably 5 to 200 nm. Thus, CCVD technique is a vapour deposition process for making thin film coatings. The CCVD coating process has the ability to deposit thin films in the open atmosphere using inexpensive precursor chemicals in solution allowing for continuous, production-line production of pipes to be provided with a fibre reinforced cladding on a polymer surface of a plastic layer. US 6,013,318 discloses a method for the Combustion Chemical Vapour Deposition of films and coatings.

The plastic layer may comprise a thermoplastic polymer such as Polypropylene or Polyethylene, for instance.

According to the preferred embodiment, the flame activated surface has an increased surface free energy (SFE) resulting from the flame treatment. The increased surface free energy of the flame activated surface increases a physicochemical bond between solid and liquid compared to a non-treated polymer surface. A low surface free energy (SFE) of polymers prevents the spreading of liquid coatings. Prior to application of the fibre reinforced cladding, the intermediate polymer surface is activated and the SFE is thus increased. In this way, physical effects that determine the adhesion behaviour of cladding and bonds (e.g. spreading coefficient, adhesion work, interfacial tension) are optimized. In general, techniques such as flame treatment, plasma treatment, corona treatment or chemical treatment are available for the activation of polymer surfaces.

The fibre-reinforced protective cladding comprises reinforcing fibres embedded in a thermoset plastic material. The thermoset plastic material embedding the fibres of the fibre-reinforced protective cladding preferably is a polyester-, a vinylester- or an epoxy resin. Accordingly, the tube is a metal tube, for instance a steel tube, or a plastic tube. If the tube is a metal tube, the pipe may comprise a thermoplastic sheath applied to the metal tube or other layers, for instance temperature insulating foams applied to the metal tube enclosed by a thermoplastic sheath. The pipe further comprises a fibre reinforced protective cladding that encloses the plastic tube or the metal tube with the thermoplastic sheath.

In an embodiment, the pipe with the fibre-reinforced cladding requires bending during preparation of or during pipeline installation. In this instance, a continuous connection between the polymer surface and the fibre-reinforced cladding maybe required of the pipe respectively a string of pipes forming a pipeline to ensure a continued performance of the fibre-reinforced cladding either for protection and/or for strengthening of the pipeline system. It is one aspect of the invention to create a bonded system between the polymer surface and the fibre-reinforced protective cladding to ensure a bending of the pipe assembly can be achieved while maintaining a tight bond between the polymer surface and the fibre reinforced cladding.

The reinforcing fibres preferably comprise glass fibres, aramid fibres, carbon fibres and/or basalt fibres that may be provided as a mat, a cloth - for instance textile glass - or rovings. In further embodiments, the fibre-reinforced cladding may comprise randomly orientated, short fibres, in particular short glass, basalt or carbon fibres. Short fibres may be fibres wherein at least 90% of the fibre have a length of less than 250 mm or less than 100 mm, preferably less than 50 mm or less than 20 mm. Short fibres may be cut rovings.

The fibre reinforced protective cladding may comprise more than one layer of reinforcing fibres. Preferably, the layers of reinforcing fibres are applied in a wet-in-wet process wherein a further layer of fibre reinforced plastic material is plied on another layer of fibre reinforced plastic material while the resin of the other layer of fibre reinforced plastic material is not fully cured.

According to a further aspect, a method of producing a pipe with a fibre reinforced protective layer is provided. The method comprises the steps of:
- providing a tube with a polymer surface;
- increasing the surface free energy of the polymer surface by means of flame treatment, plasma treatment, corona treatment or chemical treatment;
- applying a fibre reinforced cladding to the polymer surface having an increased surface free energy,
   - wherein applying of the fibre reinforced cladding comprises applying fibres embedded in a non-cured thermoset resin matrix wherein the thermosetting resin is in a liquid state and
- curing or letting the thermosetting resin cure and thus hardening it.

According to one aspect of the invention, applying of the fibre reinforced cladding comprises
- providing a mixture comprising randomly orientated short fibres embedded in a non-cured, liquid thermoset plastic material, and
- spraying or extruding the mixture of non-cured thermoset plastic material and short fibres on the activated polymer surface of the pipe.

The step of increasing the surface free energy of the polymer surface by means of flame treatment, plasma treatment, corona treatment or chemical treatment preferably comprises deposition of a flame-pyrolytically deposited layer on the polymer surface. The flame-pyrolytically deposited layer has an increased surface free energy compared to the polymer surface without a flame-pyrolytically deposited layer. The flame-pyrolytically deposited layer may comprise silicon dioxide (SiO₂). Accordingly, a silicon-containing precursor material such as tetramethysilane Si(CH₃)₄ can be used as a precursor.

Further details of the invention shall now be described by way of example with respect to the attached drawing.
- Fig. 1: of the drawing is a longitudinal cross-sectional view of a first embodiment of plastic cover protected pipe assembly;
- Fig. 2: illustrates application of a first layer of the fibre-reinforced protective cladding onto an activated polymer surface of a thermoplastic layer;
- Fig. 3: illustrates application of a second layer of the fibre-reinforced protective cladding onto the first layer of the fibre-reinforced protective cladding; and
- Fig. 4: illustrates a method of producing a pipe with a fibre reinforced protective layer.

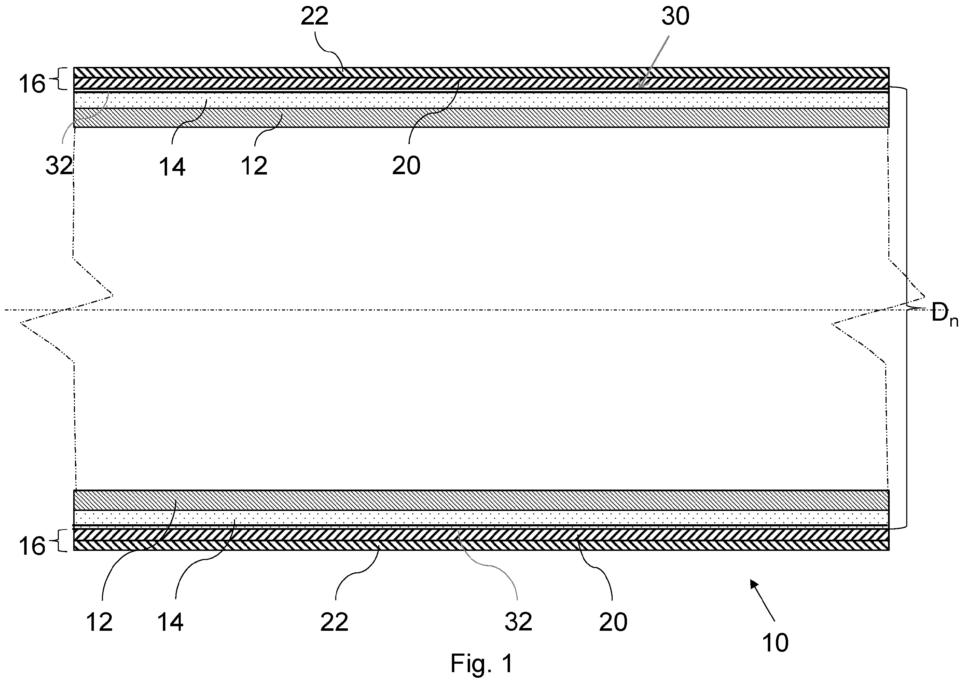

Figure 1 illustrates a pipe assembly 10 with metal pipe 12 that is enclosed by a plastic sheath 14 that in turn is enclosed by the fibre reinforced protective cladding 16.

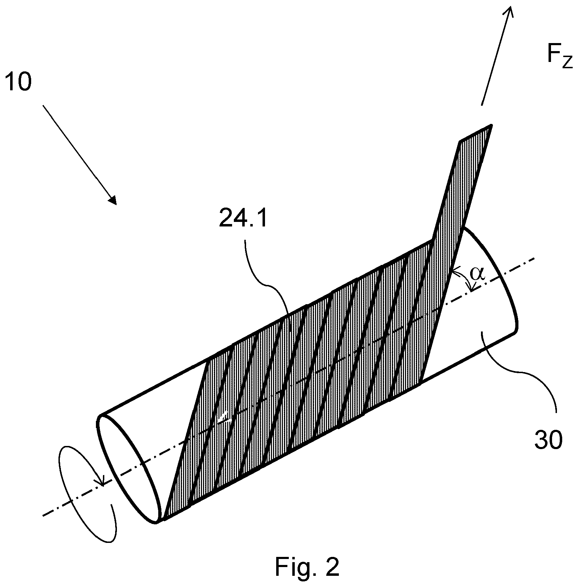

The pipe assembly 10 shown in figure 2 comprises a metal pipe 12 that is enclosed by a plastic sheath 14. The plastic sheath 14 preferably is a thermoplastic sheath, for instance a thermoplastic sheath made of Polyethylene (PE), Polypropylene (PP) or Polyurethane (PU). If a fusion bonded epoxy (FBE) coating is used in combination with a thermoplastic sheath, an adhesive layer (not shown) may be provided between the fusion bonded epoxy (FBE) coating and thermoplastic sheath 14 enclosing the fusion bonded epoxy (FBE) coating. The thermoplastic sheath 14 has a polymer surface 30 that is activated by flame treating or combustion chemical vapour deposition (CCVD) to increase the surface free energy before applying a fibre reinforced protective cladding 16.

Accordingly, the polymer surface 30 has an increased surface free energy (SFE) that improves bonding of the fibre reinforced cladding 16 to the polymer surface. The increased surface free energy (SFE) can be achieved by way of flame treatment of the polymer surface with or without using a precursor material such as tetramethysilane Si(CH₃)₄. The use of a precursor material such as tetramethysilane Si(CH₃)₄ results in a deposition of a flame-pyrolytically deposited layer 32 on the polymer surface 30. The flame-pyrolytically deposited layer 32 may comprise silicon dioxide (SiO₂) if tetramethysilane Si(CH₃)₄ is used as a precursor material.

The plastic sheath 14 with its activated polymer surface 30 is enclosed by the fibre reinforced protective cladding 16. As already known from the prior art, the fibre reinforced protective cladding preferably is made from a thermoset resin, for instance vinylester-, polyester- or epoxy resin, and reinforcing fibres embedded therein. The reinforcing fibres preferably are glass-fibres. The fibres may be provided as glass mat, glass cloth (textile glass) or glass rovings.

A pipe 10 may have a nominal diameter Dₙ between 50 mm and 1400 mm or more. The fibre reinforced protective cladding 16 preferably has a thickness of between 1.5 mm and 75 mm, or even more, preferred of between 2.5 mm and 50 mm.

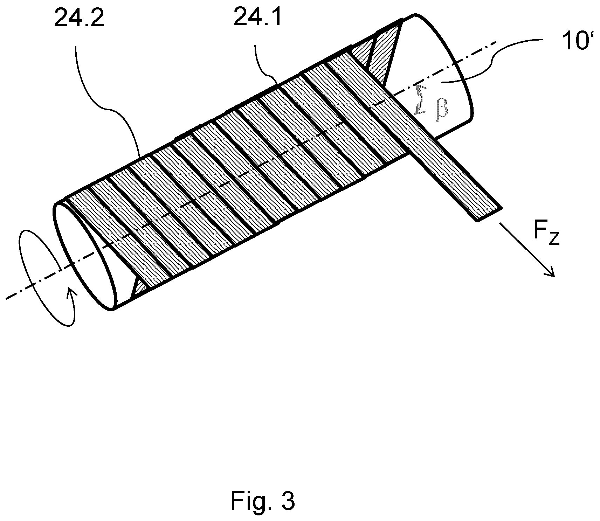

Preferably, the glass-fibres are provided as an elongate fibre fabric 24 that can be wound around the plastic sheath 14 in two different winding directions, thus forming at least one right-handed helix and one left-handed helix as illustrated in figures 2 and 3. The fibre reinforced protective cladding 16 may comprise several layers of reinforcing fibres as, for instance, described in WO 2020/002660 A1 or US 2023/0052636 A1. In particular, one layer fibre reinforced protective cladding 16 may be produced by winding a fibre fabric 24.1 in a helical manner around a pipe 10' with a first winding sense and a further layer fibre reinforced protective cladding 16 may be produced by winding a further fibre fabric 24.2 in a helical manner around a pipe 10' with a second, opposite winding sense; see figure 3.

In the preferred embodiment illustrated in figures 2 and 3, the fibres of one layer of the fibre-reinforced protective cladding 16 are arranged at a first angle α with respect to the longitudinal axis of the pipe (see figure 2), while the fibres of another - for instance second - layer of the fibre-reinforced protective cladding 16 are arranged at a second angle β with respect to the longitudinal axis of the pipe; see figure 3. The first layer of the fibre-reinforced protective cladding 16 can be directly applied on the activated polymer surface 30 of the plastic sheath 14 while the second layer of the fibre-reinforced protective cladding 16 is applied on the first layer in a wet-in-wet process, i.e. the second layer of the fibre-reinforced protective cladding 16 is applied before the resin of the first layer is fully cured. Thus, a good bonding between the polymer surface 30 and the first layer and between the first layer and the second layer is achieved.

In alternative embodiments, fibre reinforced plastic layers comprising short fibres with a length of less than 250 mm, or less than 100 mm, for instance between 5 mm and 50 mm may be provided as the fibre reinforced cladding or as a part thereof. The fibre reinforced protective cladding 16 may comprise only short fibre in random orientation or a combination of layers comprising short fibres in random orientation and long, orientated fibres. Long fibres typically have length of more than 250 mm and are combined to form fibre threads that may have a length of several meters. While short fibres typically have a random orientation in the matrix of the fibre reinforced plastic layer, long fibres have defined orientation in a respective matrix of the fibre reinforced plastic layer. The fibre reinforced plastic cladding 16 may comprise only long fibres that are orientated in a defined way. Since the fibre reinforced plastic cladding 16 may comprise more than one layer, different kinds of layers may be provided, i.e. layers with randomly orientated short fibres and layers with long fibres extending in defined directions.

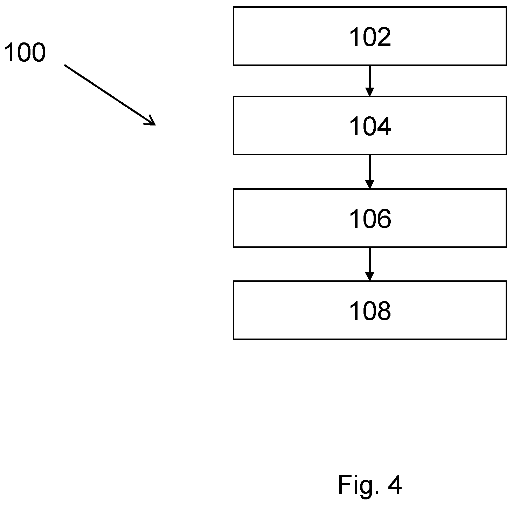

A method 100 of producing a pipe with a fibre reinforced protective layer is illustrated in figure 4. The method 100 comprises providing a tube with a polymer surface 30; method step 102. The tube may be a plastic tube or a metal tube with a plastic layer. The surface free energy (SFE) of the polymer surface 30 is increased by means of flame treatment, plasma treatment, corona treatment or chemical treatment; method step 104. On the polymer surface 30 having an increased surface free energy the fibre reinforced cladding 16 is applied; method step 106. The application 106 of the fibre reinforced cladding 16 comprises applying a layer of fibres embedded in a non-cured thermoset resin matrix wherein the thermosetting resin is in a liquid state. Once the layer of fibres embedded in a non-cured thermoset resin matrix is applied to the polymer surface 30, the thermosetting resin cures or is cured and thus hardens; step 108.

Flame treatment is a gas-phase pretreatment method in which the combustion of a hydrocarbon fuel, generates the flame plasma that modifies the polymer surface without affecting the bulk properties of the polymer. The oxidation of the polymer surface as a result of flame treatment occurs through multiple physical processes, including homogeneous combustion of the premixed reactants, transport of the products of combustion to the polymer surface and heterogeneous reaction of flame products with the polymer. The adiabatic flame temperature is approximately 1800°C. For flame treatment, a hydrocarbon fuel and an oxidizer are mixed preferably in an oxygen-rich ratio and then combusted.

The step of increasing 104 the surface free energy of the polymer surface 30 by means of flame treatment may comprise depositing a flame-pyrolytically deposited layer 32 on the polymer surface 30 by way of combustion chemical vapour deposition (CCVD). The flame-pyrolytically deposited layer 32 has an increased surface free energy compared to the polymer surface without a flame-pyrolytically deposited layer.

The difference between mere flame treatment (without a precursor material) and combustion chemical vapour deposition that uses a precursor material is the use of a precursor material such as tetramethysilane Si(CH₃)₄.

According to a preferred embodiment of the method, applying of the fibre reinforced cladding (method step 106) comprises providing a mixture comprising randomly orientated short fibres embedded in a non-cured, liquid thermoset plastic material and spraying or extruding or otherwise applying the mixture comprising non-cured thermoset plastic material and short fibres on the activated polymer surface of the pipe.

### List of reference numerals:

- 10: plastic covered protected metal pipe assembly
- 12: metal pipe
- 14: plastic sheath, thermoplastic sheath
- 16: fibre reinforced protective sheath
- 20: inner layer of the fibre reinforced protective cladding
- 22: outer layer of the fibre reinforced protective cladding
- 24: fibre fabric
- 30: polymer (outer) surface of the plastic sheath
- 32: flame-pyrolytically deposited layer

- 100: Method of producing a pipe with a fibre reinforced protective layer
- 102: providing a tube with a polymer surface
- 104: increasing the surface free energy (SFE) of the polymer surface
- 106: application of a fibre reinforced cladding to the polymer surface having an increased the surface free energy
- 108: curing or letting the thermosetting resin cure and thus hardening it

- α, β: angle between fibres and longitudinal axis of pipe
- Dₙ: nominal outer diameter of the thermoplastic sheathing

## Claims

1. Pipe for a pipeline, the pipe comprising a tube (12) being enclosed by a fibre reinforced protective cladding (16) that comprises reinforcing fibres embedded in a matrix made from a thermoset plastic material,
wherein the tube (12) is a plastic tube with a polymer surface (30) or a metal tube (12) directly or indirectly enclosed by a plastic layer with a polymer surface (30),
wherein the fibre-reinforced protective cladding (16) is applied to the polymer surface (30) and thus encloses the plastic tube or the intermediate plastic layer (14) that encloses the metal tube (12) and
wherein the polymer surface (30) has an increased free surface energy (FSE) achieved by means of flame treatment, plasma treatment, corona treatment or chemical treatment.

2. Pipe according to claim 1, wherein polymer surface (30) is flame treated and provides a flame activated interface to which the fibre reinforced cladding is applied.

3. Pipe according to claim 1 or 2, wherein a flame-pyrolytically deposited layer (32) is deposited on the polymer surface.

4. Pipe according to claim 3, wherein the flame-pyrolytically deposited layer (32) comprises silicon dioxide (SiO₂):

5. Pipe according to at least one of claims 1 to 4, wherein the thermoset plastic material of the matrix of the fibre reinforced cladding comprises a thermoset resin, such as a vinylester resin, polyester resin or epoxy resin

6. Pipe according to at least one of claims 1 to 5, wherein the reinforcing fibres are provided as rovings or fibre webs, said rovings or fibre webs being wound around the plastic tube or the plastic sheath (14) in a helical manner.

7. Pipe according to claim 6, wherein said rovings or fibre webs of the fibre reinforced protective cladding (16) are wound around the plastic tube (12') or the plastic sheath (14) in two different winding directions, thus forming at least one right-handed helix and one left-handed helix.

8. Pipe according to at least one of claims 1 to 7, wherein the reinforcing fibres comprise glass fibres, aramid fibres, carbon fibres and/or basalt fibres.

9. Pipe according to at least one of claims 1 to 8 wherein the fibre reinforced protective cladding (16) comprises more than one layer of reinforcing fibres that preferably are applied in a wet-in-wet process.

10. Pipe according to at least one of claims 1 to 9, wherein the fibre reinforced protective cladding (16) comprises at least one layer composed of short fibres embedded in the matrix made from a thermoset plastic material.

11. Pipe according to at least one of claims 1 to 10, wherein the pipe is bent after applying the fibre reinforced protective cladding (16).

12. Method (100) of producing a pipe with a fibre reinforced protective layer, said method comprising the steps of:
- providing (102) a tube with a polymer surface; (30),
- increasing (104) the surface free energy of the polymer surface (30) by means of flame treatment, plasma treatment, corona treatment or chemical treatment;
- applying (106) a fibre reinforced cladding (16) to the polymer surface having an increased surface free energy,
- wherein applying of the fibre reinforced cladding comprises
- applying a layer of fibres embedded in a non-cured thermoset resin matrix wherein the thermosetting resin is in a liquid state and
- curing or letting (108) the thermosetting resin cure and thus hardening it.

13. The method of claim 12, wherein increasing (104) the surface free energy of the polymer surface (30) by means of flame treatment comprises depositing a flame-pyrolytically deposited layer (32) on the polymer surface, said flame-pyrolytically deposited layer (32) having an increased surface free energy compared to the polymer surface (30) without a flame-pyrolytically deposited layer.

14. The method of claim 12 or 13, wherein applying (106) of the fibre reinforced cladding comprises
- providing a mixture comprising randomly orientated short fibres embedded in a non-cured, liquid thermoset plastic material, and
- spraying, extruding or moulding the mixture comprising non-cured thermoset plastic material and short fibres on the activated polymer surface of the pipe.
